(19) Europäisches Patentamt
European Patent Office
Office européen des brevets

(11) **EP 3 105 029 B1**

(12) **FASCICULE DE BREVET EUROPEEN**

(45) Date de publication et mention
de la délivrance du brevet:
**16.12.2020 Bulletin 2020/51**

(21) Numéro de dépôt: **15703620.3**

(22) Date de dépôt: **11.02.2015**

(51) Int Cl.:
**B29C 45/16** *(2006.01)*

(86) Numéro de dépôt international:
**PCT/EP2015/052901**

(87) Numéro de publication internationale:
**WO 2015/121320 (20.08.2015 Gazette 2015/33)**

(54) **PROCEDE DE FABRICATION DE PIECES**

VERFAHREN ZUR HERSTELLUNG VON BAUTEILEN

METHOD FOR PRODUCING PARTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.02.2014 FR 1400379**

(43) Date de publication de la demande:
**21.12.2016 Bulletin 2016/51**

(73) Titulaire: **Groupe JBT
39360 Molinges (FR)**

(72) Inventeurs:
• **BENOIT, Jean**
**F-39360 Chassal (FR)**
• **MALFROY, Dominique**
**F-39400 Longchaumois (FR)**
• **LAVINA, Laurent**
**F-39130 Thoiria (FR)**

(74) Mandataire: **Regimbeau
20, rue de Chazelles
75847 Paris Cedex 17 (FR)**

(56) Documents cités:
WO-A1-00/73040            WO-A1-00/73040
DE-A1-102007 051 701

• **RIEF B: "MEHR FARBE UND FUNKTION",
KUNSTOFFE, CARL HANSER VERLAG,
MUNCHEN, DE, vol. 93, no. 6, 1 juin 2003
(2003-06-01), pages 20-22,24,26, XP001153845,
ISSN: 0023-5563**

# Description

## Domaine de l'invention

L'invention concerne un procédé de fabrication de pièces en polymère et un système associé. L'invention concerne en particulier la fabrication de telles pièces en très grande série.

## Etat de l'art

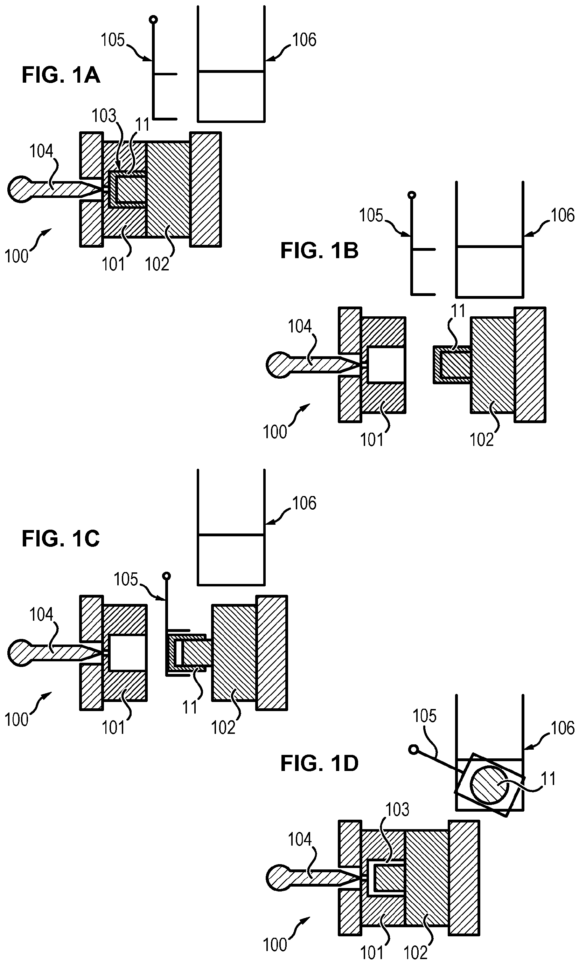

En référence aux figures 1A à 1D, un procédé de fabrication de pièces en polymère par injection peut être réalisé dans un moule 100 comprenant une partie de moule fixe 101 et une partie de moule mobile 102.

Le moule 100 est d'abord fermé pour former une cavité 103 connectée par la partie de moule fixe à un dispositif d'injection 104 de matériau.

Comme illustré figure 1A, du matériau est alors injecté dans la cavité 103 pour former une première pièce 11. Le moule 100 est alors maintenu fermé jusqu'à ce que la pièce 11 ainsi formée soit entièrement solidifiée et puisse être éjectée du moule 100.

Comme illustré figure 1B, le moule 100 est alors ouvert.

Comme illustré figure 1C, la pièce 107 solidifiée est alors éjectée et prise en charge par un robot 105.

Comme illustré figure 1D, le robot 105 transporte la pièce 11 jusqu'à un poste d'évacuation 106 d'où elle pourra être évacuée. Simultanément, le moule 100 est refermé pour permettre une nouvelle injection de matériau.

De façon générale, les pièces de faible taille et de faible épaisseur, telles que les pièces à usage médical, se prêtent bien à une mise en œuvre par injection, qui permettant des temps de cycle courts, avec un encombrement d'outillage réduit et en conséquence une productivité élevée.

L'encombrement de l'outillage est un facteur déterminant en raison du coût structurel des zones à environnement contrôlé (particules et charge biologique) exigées pour plusieurs types de production, comme par exemple la production de pièces à usage médical.

Ainsi, des pièces destinées à être assemblées entre elles peuvent être produites sur des équipements similaires, fonctionnant en parallèle en vue d'être assemblées.

En revanche, dans certains cas, certaines pièces, typiquement des pièces plus épaisses, requièrent des temps de cycle de solidification élevés. Ces pièces sont alors produites au moyen d'outillages multi-cavités de grandes dimensions pour permettre la fabrication de pièces en très grande série, ce qui augmente relativement le coût unitaire des pièces de ce type.

Dans certaines situations, deux pièces dissymétriques en épaisseur doivent être produites en quantité égale pour être ensuite assemblées entre elles.

Pour éviter ou pour le moins limiter tout stockage intermédiaire, il est alors nécessaire de disposer d'un outillage beaucoup plus important pour l'une des pièces, voire d'outillages en plus grande quantité pour être en mesure de produire des quantités de pièces à part égale, de façon simultanée.

Il est parfois nécessaire de procéder à un stockage intermédiaire des pièces de faible épaisseur puis de leur redistribution, afin de les assembler avec les pièces de forte épaisseur qui sont produites avec des cadences plus faibles.

Pour les pièces à usage médical, il est cependant préférable d'éviter les stockages intermédiaires de pièces, qui nécessitent des conditionnements supplémentaires (double emballage, stockage en atmosphère contrôlée, coûts induits...) et des manipulations risquant d'augmenter la contamination initiale des pièces avant stérilisation, comme évoqué plus haut.

De plus, toute manipulation supplémentaire entraîne des risques de mélange accidentel et complexifie l'exigence indispensable de traçabilité des pièces à usage pharmaceutique et médical. Le document DE102007051701 divulgue un procédé de fabrication de pièces en plastique moulées à plusieurs composants au moyen d'une technologie de table rotative.

## Résumé de l'invention

Un but de l'invention est de pallier ces inconvénients. Un but de l'invention est en particulier de proposer un procédé et un système de fabrication de pièces par injection permettant de mettre en œuvre la production de pièces de géométries différentes devant être assemblées, qui soit rapide tout en limitant l'encombrement de l'outillage nécessaire à la fabrication.

A cet effet, selon un premier aspect, la présente invention a pour objet un procédé de fabrication de pièces selon la revendication 1.

Il est ainsi possible, d'obtenir à une fréquence rapide des pièces nécessitant malgré leur temps de solidification plus long. En particulier, il est possible d'obtenir une telle fréquence à l'aide d'un outillage simple et peu encombrant.

En outre, il est ainsi possible de limiter encore plus, voire d'éviter tout stockage intermédiaire de pièces ayant un temps de solidification plus court avec lesquelles les pièces ainsi produites devraient être assemblées par la suite.

En particulier, il est alors possible de produire des pièces destinées à être appairées entres elles, dans des quantités égales, avec des outillages de faibles dimensions, produisant des pièces de façon simultanée, en limitant les manipulations ultérieures dues aux stockages intermédiaires.

L'invention selon le premier aspect est avantageusement complétée par les caractéristiques des revendications 2 à 10.

Selon un deuxième aspect, l'invention concerne en outre un système de fabrication de pièces selon la revendication 11.

## Brève description des figures

D'autres caractéristiques et avantages de l'invention ressortiront encore de la description qui suit, laquelle est purement illustrative et non limitative et doit être lue en regard des dessins annexés sur lesquels :

- les figures 1A à 1D représentent schématiquement des vues d'un système de fabrication de pièces selon l'état de l'art au cours d'un procédé selon l'état de l'art ;
- la figure 2 représente schématiquement un procédé de fabrication de pièces en polymère selon un exemple de mode de réalisation de l'invention,
- la figure 3 représente schématiquement un procédé de fabrication de pièces formées d'au moins deux éléments selon un autre exemple de mode de réalisation de l'invention,
- les figures 4A1 à 4D1 représentent schématiquement des vues d'un moule d'un système de fabrication de pièces selon un exemple de mode de réalisation de l'invention suivant un procédé selon autre exemple de mode de réalisation de l'invention ;

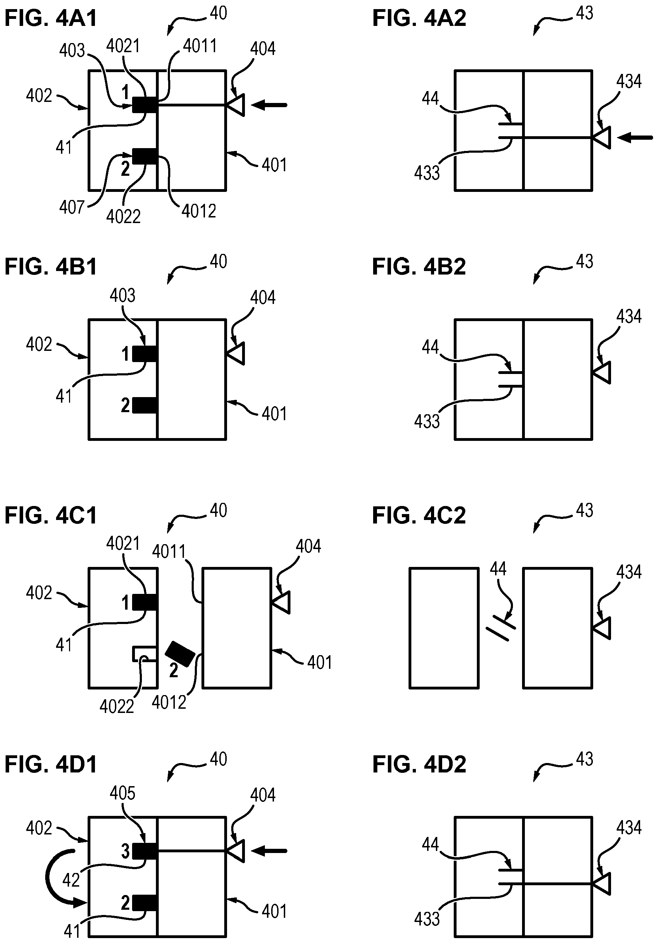

- les figures 4A2 à 4D2 représentent schématiquement des vues correspondantes des figures 4A1 à 4D1 d'un deuxième moule du même système ;

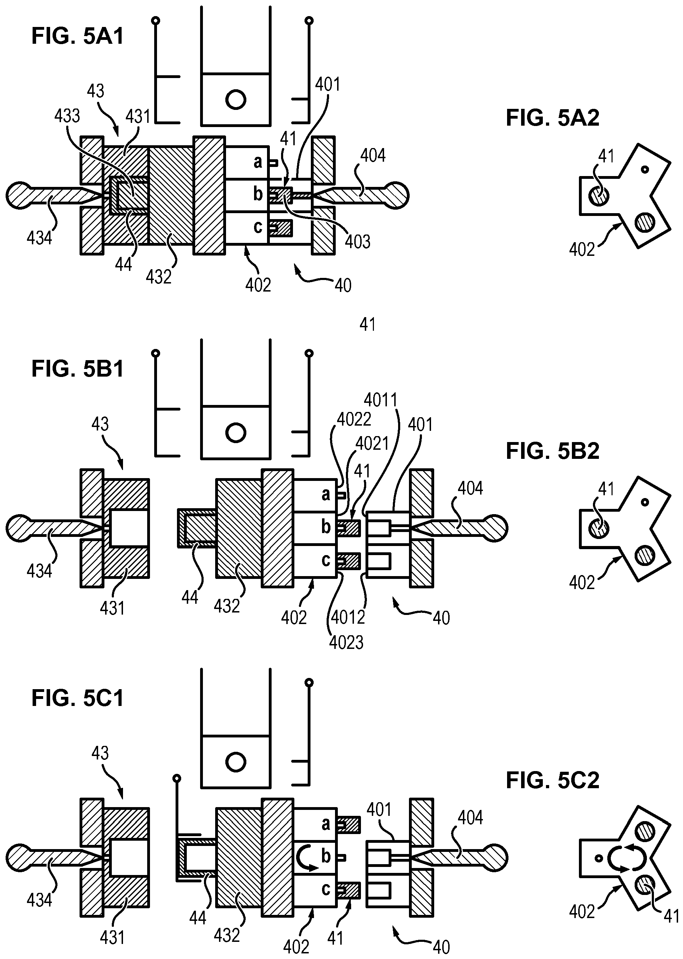

- les figures 5A1 à 5E1 représentent schématiquement des vues d'un système de fabrication de pièces selon un exemple de mode de réalisation de l'invention suivant un procédé selon autre exemple de mode de réalisation de l'invention ;
- les figures 5A2 à 5E2 représentent schématiquement des vues correspondantes des figures 5A1 à 5E1 d'une deuxième partie de moule du même système ;

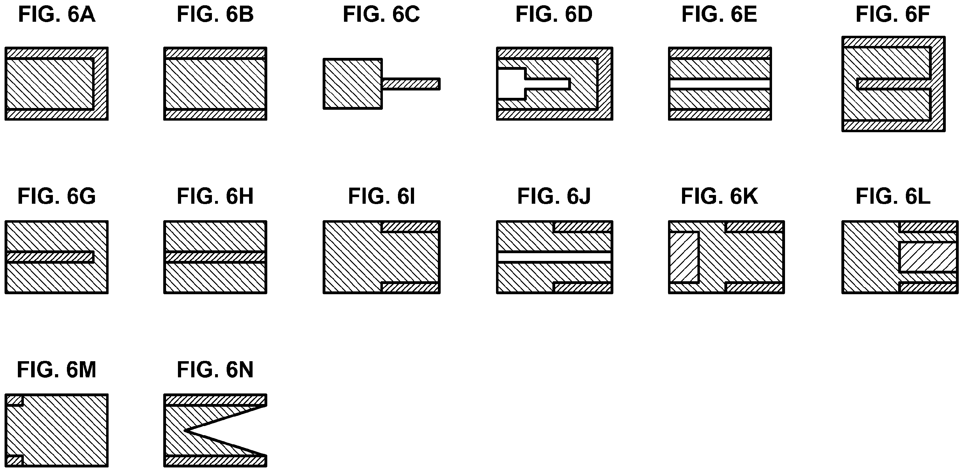

- les figures 6A à 6N représentent schématiquement différentes formes de pièces pouvant être réalisées par un procédé selon un autre exemple de mode de réalisation de l'invention.

## Description détaillée de l'invention

### Système

#### *Description générale d'un exemple de système*

En référence aux figures 4A1 à 4D2 et 5A1 à 5E2, il est décrit un système de fabrication de pièces en polymère.

Par pièce en polymère, on entend aussi bien une pièce comprenant un seul type de polymère que différents types de polymères.

Le système est adapté pour mettre en œuvre un procédé tel que décrit plus loin.

Le système comprend un moule 40. Le moule comprend typiquement une première partie de moule 401 et une deuxième partie de moule 402.

Les deux parties de moule 401 et 402 sont mobiles l'une par rapport à l'autre. Le système est typiquement adapté pour permettre le déplacement d'une des parties de moule 401 ou 402 par rapport à l'autre.

Par exemple, la première partie de moule 401 est fixe, typiquement fixe par rapport à un corps du système de fabrication ou par rapport au référentiel de la pièce dans laquelle est disposé le système, la deuxième partie de moule 402 étant alors mobile. Alternativement, la deuxième partie de moule 402 peut être fixe, typiquement fixe par rapport à un corps du système de fabrication ou par rapport au référentiel de la pièce dans laquelle est disposée le système, la première parte de moule 401 étant alors mobile. Alternativement, les deux parties de moule 401 et 402 peuvent être mobiles, typiquement mobiles entre elles et mobile chacune par rapport à un corps du système de fabrication ou par rapport au référentiel de la pièce dans laquelle est disposée le système.

Le moule 40 est typiquement adapté pour être fermé dans une première position, illustrée par exemple aux figures 4A1, 5A1 et 5A2. Dans cette première position, les deux parties de moule 401 et 402 forment typiquement au moins une première cavité d'injection 403.

La première cavité d'injection 403 est typiquement connectée à un dispositif d'injection de matière ou de matériau 404, par exemple par la première partie de moule 401. Le moule 40 est ainsi typiquement adapté pour permettre d'injecter du matériau dans la première cavité d'injection 404 de sorte à former une première pièce 41.

Le matériau est typiquement un matériau polymérisable, adapté pour solidifier en un matériau en polymère.

Le système est typiquement configuré de sorte à déplacer l'une des parties de moule par rapport à l'autre de sorte que la première pièce 41 reste connectée à la deuxième partie de moule 402. Ceci est par exemple permis par les formes du moule 40, en particulier au niveau des zones permettant de former la première cavité d'injection 403.

Le moule est typiquement adapté pour être fermé dans une deuxième position, illustrée par exemple aux figures 4D1, 5D1 et 5D2.

Dans cette deuxième position, les deux parties du moule 401 et 402 forment typiquement au moins une deuxième cavité d'injection 405.

La deuxième cavité d'injection 405 est typiquement connectée au dispositif d'injection de matériau 404, par exemple par la première partie de moule 401. Le moule 40 est ainsi typiquement adapté pour permettre d'injecter du matériau dans la deuxième cavité d'injection 405 de sorte à former une deuxième pièce 41.

Dans cette deuxième position, les deux parties du moule 401 et 402 forment typiquement une première cavité de solidification 406 dans laquelle est disposée la première pièce 41.

Le système est typiquement configuré pour permettre l'injection du matériau dans la deuxième cavité d'injection 406 de sorte à former une deuxième pièce 42 dans la deuxième cavité d'injection et simultanément solidifier la première pièce 41 disposée dans la première cavité de solidification 406.

*Zones du moule*

La première partie de moule 401 peut comprendre au moins une zone d'injection 4011 et au moins une zone de solidification 4012. La deuxième partie de moule 402 peut comprendre une première zone d'éjection 4021 et une deuxième zone d'éjection 4022. De tels exemples de zones sont par exemple fournis aux figures 4A1 à 4D1 d'une part et 5A1 à 5E1 d'autre part.

Ces zones correspondent typiquement à des empreintes ou parties moulantes, c'est-à-dire à des reliefs ou des dépressions sur la surface du moule, qui lorsqu'elles sont associées, permettent de former des cavités sensiblement fermées. Les cavités sont typiquement fermées vis-à-vis du matériau qui est typiquement injecté sous forme liquide ou sensiblement liquide, mais adaptées pour laisser l'air contenu initialement dans la cavité s'échapper lors de l'injection.

Ces zones des deux parties de moule 401 et 402 peuvent être configurées de sorte que dans la première position, la zone d'injection 4011 et la première zone d'éjection 4021 forment la première cavité d'injection 403.

De plus, ces zones des deux parties de moule 401 et 402 peuvent être configurées de sorte que dans la première position, la zone de solidification 4012 et la deuxième zone d'éjection 4022 forment une deuxième cavité de solidification 407. Un exemple de cette configuration est illustré figure 4A1.

Alternativement, ces zones des deux parties de moule 401 et 402 peuvent être configurées de sorte que dans la première position la deuxième zone d'éjection est positionnée de sorte à permettre l'éjection d'une pièce déjà solidifiée connectée à la deuxième zone d'éjection. Des exemples de telle configuration est par exemple illustré aux figures 5A1 et 5D1.

Ces zones des deux parties de moule 401 et 402 peuvent être configurées de sorte que dans la deuxième position, la zone d'injection 4011 et la deuxième zone d'éjection 4022 forment la deuxième cavité 405. Des exemples de telles configurations sont fournis aux figures 4D1 et 5D1.

De plus, ces zones des deux parties de moule 401 et 402 peuvent être configurées de sorte que dans la deuxième position la zone de solidification et la première zone d'éjection forment la cavité de solidification. Des exemples de telles configurations sont fournis aux figures 4D1 et 5D1.

En particulier, le déplacement relatif des deux parties de moule peut comprendre une rotation. Cette rotation permet par exemple déplacer la première zone d'éjection 4021 en face de la zone de solidification 4012 et la deuxième zone d'éjection 4022 en face de la zone d'injection 4011.

Il est ainsi possible de déplacer une pièce solidifiée en surface depuis une cavité d'injection vers une cavité de solidification, de sorte à permettre la formation d'une nouvelle pièce par injection pendant que la pièce déjà formée achève de se solidifier.

Ceci permet de mettre en œuvre de manière simple un procédé permettant d'augmenter la fréquence d'obtention de pièces et en particulier de le coupler à un procédé de fabrication de pièces ayant un temps de solidification plus rapide, de sorte à les assembler ensuite sans avoir à procéder à un stockage temporaire des pièces solidifiant plus rapidement.

Ces zones sont typiquement disposées au niveau de surfaces de connexion des deux parties du moule 401 et 402, ces surfaces formant typiquement un plan dit plan de joint lorsque le moule 40 est fermé.

En particulier, la première partie du moule 401 peut comprendre une pluralité de zones d'injection et une pluralité de zones de solidification, et la deuxième partie du moule 402 peut comprendre une pluralité de zones d'éjection. Il est ainsi possible d'améliorer encore la fréquence de production des pièces.

En particulier, la deuxième partie de moule 402 peut comprendre au moins un mécanisme d'éjection pour éjecter une pièce refroidie. Le mécanisme d'éjection est par exemple disposé au niveau de chaque zone d'éjection.

**Procédé**

*Procédé de fabrication de pièces*

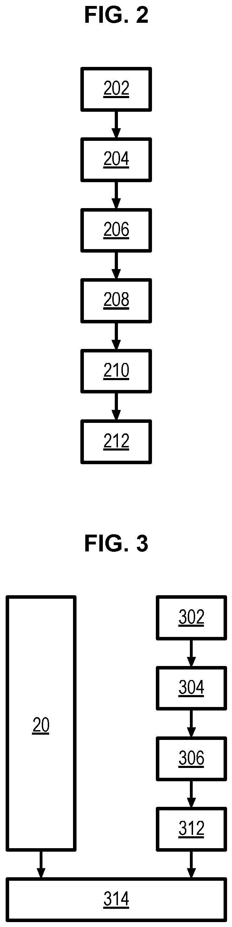

En référence à la figure 2, il est décrit un procédé de fabrication de pièces en polymère.

Le procédé est typiquement mis en œuvre par un système tel que décrit précédemment.

Les pièces sont fabriquées dans un moule 40. Le moule 40 comprend typiquement une première partie de moule 401 et une deuxième partie de moule 402.

Les deux parties de moule 401 et 402 sont mobiles l'une par rapport à l'autre.

Par exemple, la première partie de moule 401 est fixe, typiquement fixe par rapport à un corps du système de fabrication ou par rapport au référentiel de la pièce dans laquelle est disposé le système, la deuxième partie de moule 402 étant alors mobile. Alternativement, la deuxième partie de moule 402 peut être fixe, typiquement fixe par rapport à un corps du système de fabrication ou par rapport au référentiel de la pièce dans laquelle est disposée le système, la première parte de moule 401 étant alors mobile. Alternativement, les deux parties de moule 401 et 402 peuvent être mobiles, typiquement mobiles entre elles et mobile chacune par rapport à un corps du système de fabrication ou par rapport au référentiel de la pièce dans laquelle est disposée le système.

Le procédé comprend une première étape consistant à fermer 202 le moule 40 dans une première position, illustrée par exemple aux figures 4A1, 5A1 et 5A2. Dans cette première position, les deux parties de moule 401 et 402 forment au moins une première cavité d'injection 403.

La première cavité d'injection 403 est typiquement connectée à un dispositif d'injection de matière ou dispositif d'injection de matériau 404, par exemple par la première partie de moule 401. Le moule 40 est ainsi typiquement adapté pour permettre d'injecter de la matière ou du matériau dans la première cavité d'injection 404 de sorte à former une première pièce 41.

Le procédé comprend une deuxième étape consistant à injecter 204 de la matière ou du matériau dans la première cavité d'injection 403 de sorte à former une première pièce 41.

Le procédé comprend une troisième étape consistant à déplacer 206 l'une des parties de moule par rapport à l'autre, la première pièce 41 restant connectée à la deuxième partie de moule 402.

Le déplacement relatif des deux parties de moule 401 et 402 peut par exemple comprendre une rotation, typiquement pour déplacer une première zone d'éjection 4021 en face d'une zone de solidification 4012 et une deuxième zone d'éjection 4022 en face d'une zone d'injection 4011, comme décrit précédemment.

Le mouvement relatif des parties de moule 41 et 42 est typiquement un mouvement de la première partie de moule 401 et/ou de la deuxième partie de moule 402.

Le procédé comprend une quatrième étape consistant à fermer 208 le moule dans une deuxième position. Des exemples de deuxième position sont fournies par les figures 4D1, 5D1 et 5D2.

Dans la deuxième position, les deux parties de moule 401 et 402 forment au moins une deuxième cavité d'injection 405. La deuxième cavité d'injection 405 est typiquement connectée au dispositif d'injection de matériau 404, par exemple par la première partie de moule 401.

Dans la deuxième position, les deux parties de moule 401 et 402 forment également une première cavité de solidification 406 dans laquelle est disposée la première pièce 41.

Le procédé comprend une cinquième étape consistant à injecter 210 du matériau dans la deuxième cavité d'injection 405 de sorte à former une deuxième pièce 42 dans la deuxième cavité d'injection 405 et simultanément solidifier la première pièce 41 disposée dans la première cavité de solidification 406.

Ainsi le déplacement des parties de moule 401 et 402 l'une par rapport à l'autre, et donc l'ouverture du moule peut avoir lieu au niveau du point le plus précoce possible dans le temps auquel la pièce moulée a une résistance suffisante (solidification de surface) pour permettre son transfert sur la deuxième partie de moule 402 vers une autre zone de la première partie de moule 401 permettant de terminer la phase de refroidissement ou de réticulation.

Il est ainsi possible, d'obtenir à une fréquence rapide des pièces nécessitant malgré leur temps de solidification plus long. En particulier, il est possible d'obtenir une telle fréquence à l'aide d'un outillage simple et peu encombrant.

Par ailleurs, une pièce épaisse nécessite un temps de solidification long, donc un temps de cycle de production long. Une telle pièce épaisse peut être destinée à être appariée avec une pièce plastique plus fine, nécessitant un temps de cycle de production court relativement au cycle de production de la pièce plus épaisse.

Ainsi, grâce au procédé et au système décrits plus haut, une pièce épaisse bénéficie d'un temps de solidification supplémentaire dans le temps de fabrication des pièces fines, grâce au transfert de la pièce pour solidification dans la cavité de solidification 406.

Il est ainsi possible de limiter encore plus, voire d'éviter tout stockage intermédiaire de pièces ayant un temps de solidification plus court avec lesquelles les pièces ainsi produites devraient être assemblées par la suite.

Le procédé permet donc de limiter la manipulation des pièces lors de leur fabrication. Ainsi le procédé est particulièrement adapté à des pièces à usage médical et pharmaceutique pour lesquelles la contamination initiale, c'est à dire la contamination engendrée par la fabrication, est généralement proportionnelle au nombre de manipulations, doit être réduite au maximum.

Un tel procédé est particulièrement avantageux par rapport à un moule présentant uniquement des cavités d'injection, dans lesquelles chaque pièce doit être maintenue le temps de la solidification totale. En effet, un tel outillage est particulièrement encombrant par rapport à l'invention, en raison des multiples canaux d'alimentation des empreintes nécessaires pour permettre l'injection de matériau dans les empreintes par l'au moins un dispositif d'injection, et de plus un tel outillage produirait toute la série de pièces au même moment, ce qui nécessiterait une prise en charge après solidification de toutes les pièces à la fois, d'où une complexité et un encombrement de l'outillage encore augmenté par rapport à l'invention qui permet de produire avec une fréquence plus importante des pièces les unes après les autres ou par petits nombres successivement, d'où une prise en charge simplifiée impliquant un outillage plus limité.

En particulier, la première pièce peut être fabriquée par une presse à injecter mono-matière.

Il est ainsi possible de mettre en œuvre la fabrication des pièces à l'aide d'un outillage simple et peu encombrant. Ceci est particulièrement avantageux vis-à-vis d'une presse permettant une co-injection, c'est-à-dire l'injection de deux matériaux différents, et dans laquelle il est nécessaire d'attendre la solidification totale de la pièce formée par la première injection avant de saisir la pièce par un robot pour la transférer dans une zone d'injection du deuxième matériau pour former la pièce finale après avoir laissé la pièce ainsi formée se solidifier complètement suite à la deuxième injection. Par rapport à l'invention, la mise en œuvre d'un procédé de co-injection nécessite ainsi des machines d'injection relativement onéreuses, car disposant d'au moins deux unités d'injection, de moules complexes et de grandes dimensions, alors que les presses à injecter mono-matières sont d'un coût plus faible car ne disposant que d'une seule unité d'injection, sont plus standardisées, plus communes, donc présentant un choix commercial plus important, et ne sont pas des machines spécialisées ou spécifiques, par opposition aux machines de co-injection.

De plus, le procédé peut comprendre en outre une sixième étape consistant à éjecter 212 la première pièce solidifiée. La pièce solidifiée est alors typiquement prise en charge par un robot. Comme illustré figures 5C1 5D1, le robot peut transporter la pièce solidifiée jusqu'à un poste d'évacuation d'où elle pourra être évacuée. Simultanément, le moule 40 peut être refermé pour permettre une nouvelle injection de matériau.

### Procédé de fabrication de pièces formées d'au moins deux éléments

En référence à la figure 3, il est décrit un procédé de fabrication de pièces formées d'au moins deux éléments.

Le procédé est typiquement mis en œuvre par un système tel que décrit précédemment.

Le procédé peut comprendre une première étape consistant à fabriquer 20 un premier élément par un procédé tel que décrit précédemment. Il s'agit typiquement du procédé illustré figure 2.

Ces étapes sont typiquement illustrées respectivement aux figures 4A1 à 4D1 et 5A1 à 5E1.

Le procédé peut comprendre une deuxième étape consistant à fabriquer simultanément un deuxième élément dans un deuxième moule 43, le deuxième élément ayant un temps de solidification plus faible que le premier élément.

Le deuxième moule 43 comprend typiquement une première partie de deuxième moule 431 et une deuxième partie de deuxième moule 432.

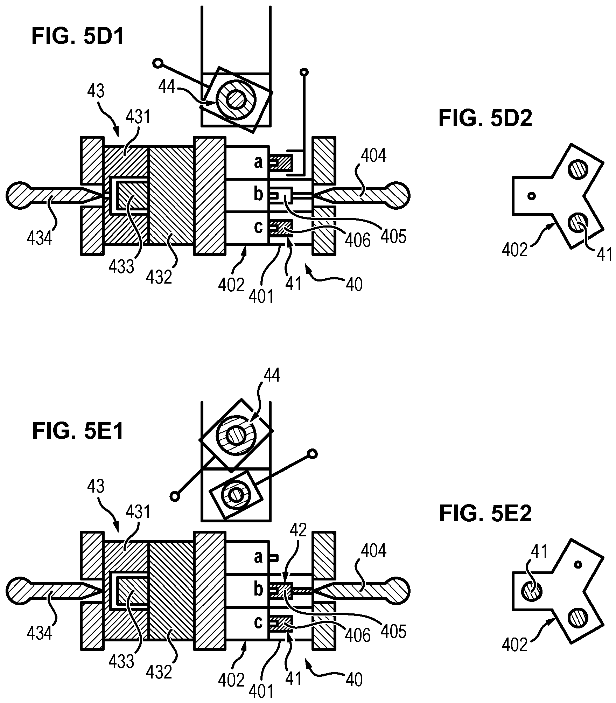

La deuxième étape comprend typiquement une première sous-étape consistant à fermer 302 le deuxième moule 43. Dans cette position, le moule 43 forme au moins une cavité d'injection 433. Cette étape est typiquement illustrée figure 5D1.

La cavité d'injection 433 est typiquement connectée à un dispositif d'injection de matériau 434. Le moule 43 est ainsi typiquement adapté pour permettre d'injecter du matériau dans la cavité d'injection 434 de sorte à former un deuxième élément 44.

La deuxième étape comprend typiquement une deuxième sous-étape consistant à injecter 304 du matériau dans la cavité d'injection 433 de sorte à former un deuxième élément 44. Cette étape est typiquement illustrée aux figures 4A2 et 4D2, et aux figures 5A1 et 5E1.

Cette deuxième sous-étape 304 comprend typiquement la solidification du deuxième élément 44 dans la cavité d'injection 433, comme illustré aux figures 4B2 et 5A1.

La deuxième étape comprend typiquement une troisième sous-étape consistant à déplacer 306 l'une des parties de deuxième moule 431 ou 432 par rapport à l'autre, le deuxième élément 44 restant connecté à la deuxième partie de moule 432. Le moule 43 est ainsi ouvert, comme illustré aux figures 4C2 et 5B1.

La deuxième étape peut comprendre en outre une sixième étape consistant à éjecter 312 le deuxième élément solidifié. Une telle sous-étape est typiquement illustrée aux figures 4C2 et 5C1. Le deuxième élément solidifié est alors typiquement pris en charge par un robot. Comme illustré figures 5C1 5D1, le robot peut transporter le deuxième élément solidifié jusqu'à un poste d'évacuation d'où il pourra être évacué. Simultanément, le deuxième moule 44 peut être refermé pour permettre une nouvelle injection de matériau.

Le procédé peut comprendre une troisième étape consistant à assembler 314 le premier élément 41 et le deuxième élément 44. Une telle étape est typiquement illustrée figure 5D1.

Ainsi, les pièces dissymétriques peuvent être produites simultanément et appariées entre elles, sans manipulation ni stockage supplémentaire.

Un autre avantage du procédé est la stricte production à parité de pièces différentes, destinées à être assemblées entre elles, avec le minimum d'étapes de manipulation ou de stockage.

En particulier, une partie du deuxième moule, typiquement la deuxième partie 432 est mobile et solidaire de la deuxième partie du moule 40 du premier élément 41. Il est ainsi possible de déplacer ces deux parties appartenant à des moules différents ensemble, typiquement par rotation. Il est ainsi possible de simplifier encore l'outillage nécessaire à la réalisation du procédé.

### Matériau

Le procédé et le système décrits plus haut peuvent être configurés pour permettre la fabrication de pièces à l'aide de différents types de matériaux et de techniques de fabrications.

### Matériau thermoplastique

Le polymère est par exemple un matériau thermoplastique ou un mélange de matériaux thermoplastiques, la solidification de la première pièce étant mise en œuvre par refroidissement du matériau.

Les pièces en polymère obtenues à partir d'un matériau thermoplastique injecté et solidifié, typiquement un polymère thermoplastique, par exemple à usage médical ou pharmaceutique, sont aisément fabriquées par le procédé et le système décrits plus haut.

L'injection est en particulier réalisée à chaud, typiquement sous pression, la matière thermoplastique injectée étant à l'état fondu. Le moule est typiquement un moule métallique refroidi. L'injection est typiquement réalisée sous pression.

La solidification est en particulier réalisée par refroidissement dans le moule.

La durée du refroidissement est typiquement fonction de l'épaisseur de la pièce. La durée du refroidissement dépend par exemple du carré de l'épaisseur selon la formule :

$$t = e^2/a$$

où « e » est une épaisseur caractéristique de la pièce, et « a » la diffusivité ou conductivité thermique. Ceci résulte de la faible conductivité thermique des matériaux thermoplastiques.

La température de la cavité d'injection est typiquement régulée, par exemple maintenue en-dessous de la température de fusion du matériau.

De même, la température de la cavité de solidification est typiquement régulée

*Matériau thermodurcissable*

Le matériau est par exemple un matériau thermodurcissable, la solidification de la première pièce étant mise en œuvre par apport d'énergie au matériau, typiquement par chauffage.

Un matériau thermodurcissable est typiquement composé de différents ingrédients. Un matériau thermodurcissable comprend typiquement des polymères linéaires adaptés pour permettre une solidification par réticulation. Alternativement ou en complément, un matériau thermodurcissable comprend typiquement des monomères adaptés pour permettre une solidification par polymérisation et pour former un matériau de structure tridimensionnelle. La solidification, polymérisation et/ou réticulation, s'effectue sous l'effet d'un apport d'énergie, typiquement par chauffage.

L'injection de matériau thermodurcissable dans le moule est typiquement réalisée par injection à froid des constituants mélangés à l'état liquide, dans un moule chaud dans lequel la réaction chimique de réticulation s'effectue.

Les pièces en polymère obtenues à partir d'un matériau thermodurcissable injecté et solidifié, par exemple à usage médical ou pharmaceutique, sont aisément fabriquées par le procédé et le système décrits plus haut.

L'injection est typiquement réalisée à froid, typiquement sous pression, avec de la matière plastique à l'état liquide dans un moule réchauffé. Le moule est typiquement un moule métallique. L'injection est typiquement réalisée sous pression.

La solidification est en particulier réalisée par réticulation dans le moule chauffé, typiquement par formation de réseaux de polymères tridimensionnels. La durée de réticulation dépend typiquement de l'épaisseur, en raison de la faible conductivité thermique des matériaux thermodurcissables, l'apport d'énergie permettant la réticulation s'effectuant typiquement à partir de la surface de la pièce en contact avec le moule.

La température de la cavité d'injection est typiquement régulée, par exemple maintenue à une température de réticulation.

De même, la température de la cavité de solidification est typiquement régulée.

Les pièces réalisées en matériau thermodurcissable peuvent typiquement subir une opération de post-cuisson. Cette opération permet par exemple de parachever la réticulation.

Cette opération de post-cuisson peut par exemple être effectuée dans le moule, dans la cavité de solidification, par exemple au cours de l'étape de solidification.

Un tel post-traitement réalisé au cours de l'étape de solidification dans la cavité de solidification est particulièrement avantageuse par rapport à sa réalisation dans la cavité d'injection car il est ainsi possible de débuter la fabrication d'une autre pièce par injection. Ceci est également avantageux par rapport à un transfert de pièces dans une enceinte distincte où les pièces subiraient une cuisson en vrac. En effet, il est ainsi possible de limiter la manipulation des pièces, et également d'éviter des étapes supplémentaires telles qu'une étape consistant à redistribuer les pièces unitairement postérieurement à la cuisson en vrac, afin de les assembler avec d'autres composants.

**Typologie des pièces**

*Nombre de composants*

Les pièces plastiques destinées à être produites par le procédé et/ou le système décrits plus haut sont typiquement composées d'au moins deux éléments.

*Deux éléments*

Les pièces plastiques destinées à être produites par le procédé et/ou le système décrits plus haut sont par exemple composées de deux éléments.

Ces pièces peuvent ainsi comprendre un élément fin ayant une épaisseur générale considérée comme fine, par exemple comprise entre 0,50 mm et 1,50 mm, par exemple comprise entre 0,75 mm et 1,25 mm, par exemple de l'ordre de 1 mm.

De plus, ces pièces peuvent ainsi comprendre un élément épais ayant une épaisseur générale considérée comme épaisse relativement à l'épaisseur fine, par exemple comprise entre 0,75 mm et 3 mm, par exemple comprise entre 1 mm et 2 mm, par exemple de l'ordre de 1,5 mm.

Les deux éléments peuvent être réalisés dans des matériaux identiques ou différents.

*Trois éléments*

Les pièces plastiques destinées à être produites par le procédé et/ou le système décrits plus haut sont par exemple composées de trois éléments, par exemple d'épaisseur croissante.

Ces pièces peuvent ainsi comprendre un premier élément fin ayant une épaisseur générale considérée comme fine, par exemple comprise entre 0,50 mm et 1,50 mm, par exemple comprise entre 0,75 mm et 1,25 mm, par exemple de l'ordre de 1 mm.

De plus, ces pièces peuvent ainsi comprendre un deuxième élément plus épais ayant une épaisseur générale considérée comme plus épaisse relativement à l'épaisseur fine, par exemple comprise entre 0,75 mm et 2 mm, par exemple comprise entre 1 mm et 1,75 mm, par exemple de l'ordre de 1,4 mm.

Ces pièces peuvent ainsi comprendre un troisième élément encore plus épais ayant une épaisseur générale considérée comme plus épaisse relativement à l'épaisseur du deuxième élément, par exemple comprise entre 1 mm et 3 mm, par exemple comprise entre 1,5 mm et 2,5 mm, par exemple de l'ordre de 2 mm.

*Dimensionnement en fonction du temps de solidification*

La typologie des éléments destinés à être fabriquées et assemblées par le procédé et/ou système décrits plus haut est typiquement déterminée par le temps de solidification, c'est-à-dire par exemple le temps de refroidissement ou de réticulation, pour chacun des éléments. Ce temps dépend de l'épaisseur et du matériau utilisés.

Le temps de solidification d'un l'élément doit être par exemple de l'ordre de deux fois celui de l'élément immédiatement plus fin, et donc typiquement de quatre fois celui de l'élément encore plus fin.

Par temps de solidification on entend le temps nécessaire à passer dans une cavité de solidification pour permettre la solidification suffisante pour le transfert et l'assemblage de l'élément.

Ainsi, selon un exemple impliquant des matériaux thermoplastiques, on considère élément plus épais d'épaisseur $e_2$, avec un temps de refroidissement $t_2$, et un élément plus fin d'épaisseur $e_1$ avec un temps de refroidissement $t_1$, les éléments étant produits et assemblés à parité. Les deux éléments seront préférentiellement dimensionnés pour vérifier la règle que $2.t_1 = t_2$. Par suite, en estimant le temps de refroidissement des éléments selon l'équation $t = e^2/a$ et en admettant que la diffusivité thermique des matières plastiques est sensiblement égale, l'épaisseur de la pièce plus épaisse sera $e_2 = \sqrt{2} . e_1$, soit $e_2 = 1,4 . e_1$

De la même façon, dans le cas de trois éléments d'épaisseur croissante $e_1$ $e_2$ et $e_3$, ces éléments seront préférentiellement dimensionnés pour vérifier que $4.t_1 = 2.t_2 = t_1$ avec les épaisseurs $e_3 = \sqrt{2} . e_2 = \sqrt{2} .\sqrt{2} .e_1$ ou bien $e_3 = \sqrt{2} . e_2 = 2 .e_1$

Une telle règle est par exemple appliquée avec une tolérance, soit au niveau des épaisseurs ($\pm$ 50%) soit des temps de cycle ($\pm$ 50%).

Dans la prise en compte des épaisseurs des pièces, seule la partie la plus épaisse de chaque pièce est typiquement à considérer pour l'application cette règle, ce qui autorise le recours à des pièces géométriquement dissymétriques.

Concernant la conductivité thermique, la règle ci-dessus peut être affinée en fonction de la nature des matériaux utilisés et des polymères que l'on cherche à obtenir, par exemple, la conductivité d'un polymère cristallin est plus élevée que celle d'un polymère amorphe.

*Matériaux*

Comme indiqué précédemment, une pièce ou élément de pièce produit par le procédé et/ou système décrit plus haut comprend par exemple un matériau en polymère obtenu à partir d'un matériau thermoplastique, le matériau en polymère étant amorphe, c'est-à-dire ayant une structure non organisée, tel que PS, PMMA, PC, SEBS, ou cristallin, c'est-à-dire ayant structure organisée, dans laquelle les chaînes sont partiellement alignées, tel que PP ou PE par exemple.

Comme indiqué précédemment, une pièce ou élément de pièce produit par le procédé et/ou système décrit plus haut comprend par exemple au moins un matériau en polymère obtenu à partir d'un matériau thermodurcissable, en particulier un ou plusieurs élastomères de type SI, IIR, IR, NR, NBR,...etc

La vitesse de refroidissement des matériaux thermoplastiques est généralement plus rapide que la vitesse de réticulation des matériaux thermodurcissables ou des matériaux permettant d'obtenir des élastomères, mais le procédé proposé est adapté aux différents matériaux. Ainsi, de manière avantageuse, une pièce peut comprendre un élément en un polymère thermoplastique et un autre élément en un élastomère thermoplastique, ou obtenu à partir d'un matériau thermoplastique, de type SEBS, SEPS, EPDM dont la vitesse de refroidissement est plus importante, indépendamment de la géométrie des pièces. Il est également possible d'associer un polymère thermoplastique, ou obtenu à partir d'un matériau thermoplastique, d'épaisseur fine, donc de temps de refroidissement rapide avec un élastomère obtenu à partir d'un matériau thermodurcissable de temps de réticulation long.

*Géométrie*

Le procédé et/ou le système décrits plus haut sont particulièrement adaptés à la fabrication d'éléments de géométries différentes pour une association ultérieure.

Les éléments destinés à être associés présentent typiquement une épaisseur moyenne faible et une épaisseur maximale, pour l'élément le plus épais, de l'ordre de 1,5 à 4 fois plus importante que l'épaisseur de l'élément le plus fin pour les pièces à deux éléments, de l'ordre de 1,5 à 3,0 fois plus importante que l'épaisseur de l'élément immédiatement plus fin pour les pièces à trois éléments ou plus.

Les figures 6A à 6N illustrent des vues en coupe d'exemples de pièces composées de deux ou trois éléments assemblés entre eux, et pouvant être réalisées par le procédé et/ou le système décrits plus haut.

Ces pièces ont typiquement une forme à symétrie cylindrique. Alternativement, les pièces peuvent avoir une forme de cylindre à base polygonale, typiquement à base rectangulaire, typiquement à base carrée.

Dans le cas de deux pièces, le rapport des épaisseurs est compris entre 1,5 et 4 fois.

Dans le cas de trois pièces, le rapport des épaisseurs est compris entre 1,5 et 3,0 entre la pièce la plus fine et la pièce intermédiaire et dans le même rapport entre la pièce intermédiaire et la pièce la plus épaisse.

*Utilisation des pièces*

Comme indiqué plus haut, le procédé est particulièrement adapté pour des pièces destinées au domaine pharmaceutique et médical.

En particulier, dans le domaine pharmaceutique et médical, les pièces doivent être produites dans des conditions d'environnement contrôlées et réglementées, permettant d'une part la maîtrise de la contamination des pièces en terme particulaire, mais également la maîtrise de la contamination des pièces en termes microbiologiques, estimée par le « bioburden », c'est-à-dire la contamination bactérienne ou charge biologique initiale avant stérilisation.

Le « bioburden » des pièces augmente de façon proportionnelle avec le nombre de manipulations et le temps d'exposition à l'environnement extérieur.

Ainsi, il est nécessaire de limiter le plus possible le temps d'exposition des pièces et le nombre de manipulation lors de leur production.

En particulier, dans le domaine pharmaceutique les étapes critiques et les différents facteurs déterminant la contamination initiale des pièces produites dépendent de la présence humaine, du degré d'automatisation, du nombre d'étapes de fabrication et de stockage, et de la qualité du contrôle environnemental.

Le procédé et le système décrits plus haut sont particulièrement avantageux à cet égard car ils permettent une automatisation limitant la présence humaine, une limitation du nombre d'étapes de fabrication, et une limitation voire une absence du stockage intermédiaire.

Les pièces peuvent être aussi utilisés dans les domaines suivants: cosmétique (par exemple pour des bouchons ou des brosses à dents), alimentaire (par exemple pour des bouchons), automobile (par exemple pour des comodos), grande consommation (par exemple pour des stylos).

**Exemples détaillés**

Premier Exemple

Les figures 4A1 à 4D2 illustrent un exemple de procédé de fabrication d'une pièce constituée de deux éléments.

La pièce est par exemple un protecteur d'aiguille couramment utilisé dans le domaine pharmaceutique, notamment dans le domaine des seringues pré-remplies de médicaments et destinées par exemple à être incorporées dans les stylos d'auto-injection de médicaments.

La pièce se compose typiquement de deux éléments. Le premier élément 41 est par exemple une pièce en élastomère, typiquement de forme cylindrique, comportant une partie conique interne destinée à recevoir l'aiguille. Le deuxième élément 44 est typiquement une pièce en plastique rigide tubulaire, recouvrant le premier élément 41 et destinée à rigidifier ce même premier élément 41 plus souple.

Les deux éléments sont typiquement fabriqués en quantités égales car ils sont destinés à être assemblées entres eux à parité stricte.

Le premier élément 41 forme typiquement une pièce interne en élastomère, et peut comporter des parties épaisses, typiquement de l'ordre de 2,5 mm. Le deuxième élément 44 forme typiquement une pièce tubulaire rigide qui peut présenter une épaisseur générale fine et homogène, typiquement de l'ordre de 1,0 mm.

Pour cet exemple, le deuxième élément 44 est typiquement produit sur une machine d'injection mono-matière standard équipée d'un moule de seize empreintes, tandis que premier élément 41 est typiquement produit sur une machine d'injection mono-matière standard équipée d'un moule de 2x16 empreintes rotatif, dont seize empreintes destinées à l'injection proprement dite et à une première solidification, en particulier au refroidissement, jusqu'à que la température et l'état de solidification en surface permettent au premiers éléments d'être transférés et seize empreintes destinées uniquement à la solidification, typiquement à la suite de la solidification, en particulier au refroidissement.

Comme illustré aux figures 4A1 et 4A2, le premier élément 41 et le deuxième élément 44 sont typiquement simultanément formés par injection selon les étapes 204 et 304 décrites plus haut. Les injections sont typiquement réalisées dans seize premières cavités d'injection 403 de premiers éléments et dans seize cavités d'injection 433 de deuxièmes éléments.

Comme illustré aux figures 4B1 et 4B2, une première solidification peut alors s'effectuer. Au bout de cette étape, les deuxièmes éléments 44 sont typiquement entièrement rigidifiés, tandis que les premiers éléments 41 ont typiquement refroidi suffisamment pour être manipulables.

Comme illustré aux figures 4C1 et 4C2, les deuxièmes éléments 44 sont alors typiquement éjectés, selon l'étape 312, par exemple de même que des premiers éléments 41 éventuellement issus d'un précédent cycle de fabrication.

Par ailleurs, les premiers éléments 41 suffisamment refroidis pour être manipulable sont typiquement transférés déplacés sur la deuxième partie de moule 402, par exemple par rotation de la deuxième partie de moule 402, pour la poursuite du refroidissement.

Comme illustré figures 4D1 et 4D2, un nouveau jeu de seize premiers éléments 41 et un nouveau jeu de seize deuxièmes éléments 44 sont typiquement injectés à nouveau simultanément.

Une première solidification peut alors typiquement s'effectuer, pour les premiers éléments 41 venant d'être injectées. De même, une solidification complète des deuxièmes éléments 44 peut avoir lieu dans le même temps.

Les deuxièmes éléments 44 solidifiés sont alors typiquement éjectés à nouveau, tandis que premiers éléments 41 ayant achevé la première solidification sont typiquement déplacés dans des cavités de solidification 407 du moule pour poursuivre leur solidification, tandis que premiers éléments 41 issus de l'injection précédente et ayant achevé leur cycle de solidification sont typiquement également éjectés.

Ainsi, à chaque éjection des seize deuxièmes éléments 44, seize premiers éléments 41 ayant nécessité un temps de solidification environ deux fois plus long peuvent également être éjectés.

Les premiers éléments et deuxièmes éléments peuvent typiquement être assemblés entre eux selon l'étape 314, à parts égales, à chaque cycle de fabrication des deuxièmes éléments 44, sans manipulation supplémentaire ni stockage, ce qui limite des risques de mélange, l'augmentation de la contamination initiale et les coûts de conditionnement.

*Deuxième exemple*

Les figures 5A1 à 5E2 illustrent un autre exemple de procédé de fabrication d'une pièce constituée de deux éléments.

Les pièces sont par exemple également un protecteur d'aiguille.

Cet exemple diffère du précédent dans le sens ou le temps de solidification du premier élément 41 est typiquement sensiblement égal à trois fois le temps de solidification du deuxième élément 44 destiné à être assemblé à parité avec le premier élément 41.

Le deuxième élément 44 est typiquement produit sur un deuxième moule 43 de n cavités d'injections, « n » étant un nombre entier positif, le premier élément 41 étant alors typiquement produit sur un moule 40 dont la deuxième parties de moule 402 comporte 3xn zones d'éjection 4021, 4022 et 4023.

Le premier élément 41 et le deuxième élément 44 sont par exemple produits sur des presses à injecter.

Les presses sont typiquement associées en tandem, le temps de la production, les premiers éléments 41 et deuxièmes éléments 44 produits étant typiquement immédiatement assemblés entres eux, par exemple à l'aide d'un poste d'assemblage.

Cet assemblage est typiquement réalisé sans manipulation particulière telle qu'une mise en stock, une redistribution ou une reprise. Il est ainsi possible de maintenir une contamination initiale minimale et d'éviter tout risque de mélange.

Par exemple, comme illustré aux figures 5A1 et 5A2, la deuxième partie de moule 402 comporte trois zones d'éjection A, B et C.

Typiquement, au cours d'un premier cycle, un deuxième élément 44 est produit par injection, tandis que le premier élément 41 disposé sur la zone C est éjecté, que celui disposé sur la zone C est solidifié dans une cavité de solidification et celui disposé sur la zone A est injecté.

Typiquement, comme illustré aux figures 5B1 et 5B2, au cours d'un deuxième cycle, le deuxième élément 44 est solidifié tandis que les premiers éléments 41 disposés sur les zones A et B sont solidifiés.

Typiquement, comme illustré aux figures 5C1 et 5C2, au cours d'un troisième cycle, le deuxième élément 44 est éjecté du deuxième moule 43 et la deuxième partie de moule 402 est déplacée, typiquement par rotation, ce qui permet au premier élément 41 disposé au niveau de la zone A de poursuivre sa solidification à l'endroit de l'espace occupé par la zone B au cycle précédent, et au premier élément 41 disposé au niveau de la zone B de poursuivre sa solidification à l'endroit de l'espace occupé par la zone C au cycle précédent.

Typiquement, comme illustré aux figures 5D1 et 5D2, au cours d'un quatrième cycle, le deuxième élément 44 issu du cycle précédent rejoint un deuxième élément éjecté de la zone C avant le premier cycle, et en attente pour assemblage, tandis qu'un nouveau deuxième élément 44 est injecté dans le deuxième moule, et qu'un nouveau premier élément est injecté au niveau de la zone C, qui occupe le même endroit que la zone A lors de la précédent injection et que la solidification des premiers éléments 41 disposés au niveau des zones A et B se poursuit.

Typiquement, comme illustré aux figures 5E1 et 5E2, au cours d'un cinquième cycle, le deuxième élément 44 achève sa solidification avant éjection et le premier élément disposé au niveau de la zone B est éjecté.

**Revendications**

1. Procédé de fabrication de pièces formées d'au moins deux éléments (41, 44), dans lequel le procédé comprend :

- fabriquer un premier élément (41) par un procédé de fabrication de premiers éléments en polymère dans un premier moule (40) comprenant une première partie de moule (41) et une deuxième partie de moule (42) mobiles l'une par rapport à l'autre, le procédé comprenant les étapes consistant à :

    o fermer (202) le premier moule dans une première position dans laquelle les deux parties de moule forment au moins une première cavité d'injection (403) connectée par la première partie de moule à un dispositif d'injection de matériau (404),

    o injecter (204) du matériau dans la première cavité d'injection de sorte à former un premier premier élément (41),

    o déplacer (206) l'une des parties de moule par rapport à l'autre, le premier élément restant connecté à la deuxième partie de moule,

    ◦ fermer (208) le premier moule dans une deuxième position, dans laquelle les deux parties forment :

        ■ au moins une deuxième cavité d'injection (405) connectée par la première partie de moule au dispositif d'injection de matériau, et

        ■ une première cavité de solidification (406) dans laquelle est disposée la première pièce,

    ◦ injecter (210) du matériau dans la deuxième cavité d'injection de sorte à former un deuxième premier élément (42) dans la deuxième cavité d'injection et simultanément solidifier le premier premier élément disposé dans la première cavité de solidification,

- simultanément, fabriquer (302, 304, 306, 312) un deuxième élément (44) dans un deuxième moule (43), le deuxième élément ayant un temps de solidification plus faible que le premier élément, et

- assembler (314) le premier élément et le deuxième élément,

dans lequel la première partie de moule (401) comprend au moins une zone d'injection (4011) et au moins une zone de solidification (4012), et la deuxième partie de moule (402) comprend une première zone d'éjection (4021) et une deuxième zone d'éjection (4022), de sorte que :

    - dans la première position :

        ◦ la zone d'injection et la première zone d'éjection forment la première cavité d'injection (403), et

        ◦ la zone de solidification et la deuxième zone d'éjection forment une deuxième cavité de solidification, ou la deuxième zone d'éjection est positionnée de sorte à permettre l'éjection d'une pièce solidifiée connectée à la deuxième zone d'éjection,

    - dans la deuxième position :

        ◦ la zone d'injection et la deuxième zone d'éjection forment la deuxième cavité et

        ◦ la zone de solidification et la première zone d'éjection forment la cavité de solidification,

dans lequel la première partie de moule (401) comprend une pluralité de zones d'injection et une pluralité de zones de solidification, et la deuxième partie de moule (402) comprend une pluralité de zones d'éjection.

**2.** Procédé selon la revendication 1, dans lequel le déplacement (206) relatif des deux parties de moule (41, 42) comprend une rotation de sorte à déplacer la première zone d'éjection en face de la zone de solidification et la deuxième zone d'éjection en face de la zone d'injection.

**3.** Procédé selon la revendication 1 ou 2, dans lequel le matériau est :

    - un matériau thermoplastique, la solidification de la première pièce étant mise en œuvre par refroidissement du matériau, ou

    - un matériau thermodurcissable, la solidification de la première pièce étant mise en œuvre par apport d'énergie au matériau, typiquement par chauffage.

**4.** Procédé selon l'une des revendications 1 à 3, dans lequel la première pièce (41) est fabriquée par une presse à injecter mono-matière.

**5.** Procédé selon l'une quelconque des revendications 1 à 4, comprenant en outre, l'étape consistant à éjecter (212) la première pièce solidifiée.

**6.** Procédé selon l'une quelconque des revendications 1 à 5, dans lequel une partie du deuxième moule (431, 432) est mobile et solidaire de la deuxième partie du moule (402) du premier élément (41).

**7.** Procédé selon l'une quelconque des revendications 1 à 5, dans lequel l'élément le plus épais parmi le premier et le deuxième élément présente une épaisseur maximale de 1,5 à 4 fois plus importante que l'épaisseur de l'élément le plus fin.

8. Procédé selon l'une des revendications 1 à 5 ou 7, dans lequel l'élément le plus épais parmi le premier et le deuxième élément présente une épaisseur comprise entre 0,50 mm et 1,50 mm, par exemple comprise entre 0,75 mm et 1,25 mm, par exemple de l'ordre de 1 mm, et l'élément le plus fin présente une épaisseur comprise entre 0,75 mm et 3 mm, par exemple comprise entre 1 mm et 2 mm, par exemple de l'ordre de 1,5 mm.

9. Procédé selon l'une quelconque des revendications 1 à 5, dans lequel les éléments sont en matériaux thermoplastiques, et comprennent un élément dit « épais » et un élément dit « fin », l'épaisseur $e_2$ de l'élément épais est définie par :

$$e_2 = \sqrt{2} \cdot e_1$$

où $e_1$ est l'épaisseur de l'élément fin, de sorte que le temps de refroidissement de l'élément épais soit le double du temps de refroidissement de l'élément fin.

10. Procédé selon l'une quelconque des revendications 1 à 5, dans lequel la pièce est formée d'au moins trois éléments, et l'élément le plus épais présente une épaisseur maximale de l'ordre de 1,5 à 3,0 fois plus importante de l'élément immédiatement plus fin.

11. Système de fabrication de pièces en polymère pour mettre en œuvre un procédé selon l'une quelconque des revendications précédentes.

**Patentansprüche**

1. Herstellungsverfahren von geformten Stücken aus wenigstens zwei Elementen (41, 44), bei dem das Verfahren umfasst:

- Herstellen eines ersten Elements (41) durch ein Herstellungsverfahren von ersten Elementen aus Polymer in einer ersten Form (40), umfassend einen ersten Formteil (41) und einen zweiten Formteil (42), die in Bezug zueinander mobil sind, wobei das Verfahren die Schritte umfasst, bestehend aus:

◦ Schließen (202) der ersten Form in einer ersten Position, in der die zwei Formteile wenigstens eine erste Einspritzausnehmung (403) bilden, die von dem ersten Formteil an eine Material-Einspritzvorrichtung (404) angeschlossen wird,
◦ Einspritzen (204) des Materials in die erste Einspritzausnehmung derart, dass ein erstes Element (41) gebildet wird,
◦ Versetzen (206) eines der Formteile in Bezug zu dem anderen, wobei das erste Element an dem zweiten Formteil angeschlossen bleibt,
◦ Schließen (208) der ersten Form in einer zweiten Position, in der die zwei Teile bilden:

■ wenigstens eine zweite Einspritzausnehmung (405), die durch den ersten Formteil an die Materialeinspritz-Vorrichtung angeschlossen wird, und
■ eine erste Verfestigungsausnehmung (406), in der das erste Stück angeordnet ist

◦ Einspritzen (210) des Materials in die zweite Einspritzausnehmung derart, dass ein zweites erstes Element (42) in der zweiten Einspritzausnehmung gebildet wird und gleichzeitig Verfestigen des ersten ersten Elements, das in der ersten Verfestigungsausnehmung angeordnet ist,

- gleichzeitig Herstellen (302, 304, 306, 312) eines zweiten Elements (44) in einer ersten Form (43), wobei das zweite Element eine kürzere Verfestigungszeit aufweist als das erste Element, und
- Zusammensetzen (314) des ersten Elements und des zweiten Elements,
bei dem der erste Formteil (401) wenigstens einen Einspritzbereich (4011) und wenigstens einen Verfestigungsbereich (4012) umfasst und der zweite Formteil (402) einen ersten Auswurfteil (4021) und einen zweiten Auswurfteil (3022) derart umfasst, dass:
- in der ersten Position:

◦ der Einspritzbereich und der erste Auswurfbereich die erste Einspritzausnehmung (403) bilden, und
◦ der Verfestigungsbereich und der zweite Auswurfbereich eine zweite Verfestigungsausnehmung bilden oder der zweite Auswurfbereich derart positioniert ist, dass der Auswurf eines verfestigten, an den zweiten Auswurfbereich angeschlossenen Stücks ermöglicht wird,

- in der zweiten Position:

◦ der Einspritzbereich und der zweite Auswurfbereich die zweite Ausnehmung bilden und

◦ der Verfestigungsbereich und der erste Auswurfbereich die Verfestigungsausnehmung bilden,

bei dem der erste Formteil (401) eine Vielzahl von Einspritzbereichen und eine Vielzahl von Verfestigungsbereichen umfasst und der zweite Formteil (402) eine Vielzahl von Auswurfbereichen umfasst.

2. Verfahren gemäß Anspruch 1, bei dem die Versetzung (206) in Bezug auf die zwei Formteile (41, 42) eine Drehung derart umfasst, dass der erste Auswurfbereich gegenüber dem Verfestigungsbereich und der zweite Auswurfbereich gegenüber dem Einspritzbereich versetzt werden.

3. Verfahren gemäß Anspruch 1 oder 2, bei dem das Material:

 - ein thermoplastisches Material ist, wobei die Verfestigung des ersten Stücks per Abkühlen des Materials umgesetzt wird, oder
 - ein wärmeaushärtendes Material ist, wobei die Verfestigung des ersten Stücks per Energieeintrag in das Material, typischerweise per Heizen, umgesetzt wird.

4. Verfahren gemäß einem der Ansprüche 1 bis 3, bei dem das erste Stück (41) durch eine Einspritzpresse für ein einziges Material hergestellt wird.

5. Verfahren gemäß irgendeinem der Ansprüche 1 bis 4, umfassend darüber hinaus den Schritt, der im Auswerfen (212) des ersten verfestigten Stücks besteht.

6. Verfahren gemäß irgendeinem der Ansprüche 1 bis 5, bei dem ein Teil der zweiten Form (431, 432) mobil und mit dem zweiten Teil der Form (402) des ersten Elements (41) fest verbunden ist.

7. Verfahren gemäß irgendeinem der Ansprüche 1 bis 5, bei dem das dickste Element aus dem ersten und dem zweiten Element eine maximale Dicke von 1,5 bis 4 Mal größer als die Dicke des dünnsten Elements aufweist.

8. Verfahren gemäß einem der Ansprüche 1 bis 5 oder 7, bei dem das dickste Element von dem ersten und dem zweiten Element eine zwischen 0,50 mm und 1,50 mm inbegriffene, z. B. zwischen 0,75 mm und 1,25 mm inbegriffene Dicke, z. B. in der Größenordnung von 1 mm aufweist und das dünnste Element eine zwischen 0,75 mm und 3 mm inbegriffene, z. B. zwischen 1 mm und 2 mm inbegriffene Dicke, z. B. in der Größenordnung von 1,5 mm aufweist.

9. Verfahren gemäß irgendeinem der Ansprüche 1 bis 5, bei dem die Elemente aus thermoplastischen Materialien sind und ein als "dick" bezeichnetes Element und ein als "dünn" bezeichnetes Element umfassen, die Dicke $e_2$ des dicken Elements definiert ist durch:

$$e_2 = \sqrt{2} \cdot e_1$$

wobei $e_1$ die Dicke des dünnen Elements derart ist, dass die Abkühlzeit des dicken Elements das Doppelte der Abkühlzeit des dünnen Elements ist.

10. Verfahren gemäß irgendeinem der Ansprüche 1 bis 5, bei dem das Stück aus wenigstens drei Elementen gebildet ist und das dickste Element eine maximale Dicke in der Größenordnung von 1,5 bis 3,0 Mal größer als das unmittelbar dünnste Element aufweist.

11. Herstellungsverfahren von Stücken aus Polymer zum Umsetzen eines Verfahrens gemäß irgendeinem der voranstehenden Ansprüche.

**Claims**

1. A method for producing parts formed by at least two elements (41,44) wherein the method comprises:

 - producing a first element (41) by a method of producing first elements of polymer in a first mould (40) comprising a first mould portion (41) and a second mould portion (42) movable relative to the other, the method comprising the steps of:

  ◦ closing (202) the first mould in a first position in which the two mould portions form at least one first injection cavity (403) connected via the first mould portion to a material injection device (404),
  ◦ injecting (204) material into the first injection cavity to form a first element (41),
  ◦ moving (206) one of the mould portions relative to the other, the first element remaining connected to the second mould portion,
  ◦ closing (208) the first mould in a second position, in which the two portions form:

   ▪ at least one second injection cavity (405) connected via the first mould portion to the material injection device, and
   ▪ a first solidification cavity (406) in which the first part is placed,

  ◦ injecting (210) material into the second injection cavity to form a second part (42) in the second injection cavity and simultaneously solidifying the first part placed in the first solidification cavity,

- simultaneously, producing (302, 304, 306, 312) a second element (44) in a second mould (43), the second element having a lower solidification time than the first element, and
- assembling (314) the first element and the second element,

wherein the first mould portion (401) comprises at least one injection zone (4011) and at least one solidification zone (4012), and the second mould portion (402) comprises a first ejection zone (4021) and a second ejection zone (4022), so that:

- in the first position:

  ◦ the injection zone and the first ejection zone form the first injection cavity (403), and
  ◦ the solidification zone and the second ejection zone form a second solidification cavity, or the second ejection zone is positioned so as to allow ejection of a solidified part connected to the second ejection zone,

- in the second position:

  ◦ the injection zone and the second ejection zone form the second cavity, and
  ◦ the solidification zone and the first ejection zone form the solidification cavity,

wherein the first mould portion (401) comprises a plurality of injection zones and a plurality of solidification zones, and the second mould portion (402) comprises a plurality of ejection zones.

2. The method according to claim 1, wherein the relative movement (206) of the two mould portions (41, 42) comprises a rotation so as to move the first ejection zone in front of the solidification zone and the second ejection zone in front of the injection zone.

3. The method according to claim 2 or 3, wherein the material is:

   - a thermoplastic material, the solidification of the first part is performed by cooling the material, or
   - a thermosetting material, the solidification of the first part is performed by applying energy to the material, typically by heating.

4. The method according to one of claims 1 to 3, wherein the first part (41) is produced by a single-material injection moulding machine.

5. The method according to any one of claims 1 to 4, further comprising the step of ejecting (212) the first solidified part.

6. The method according to any one of claims 1 to 5, wherein a portion of the second mould (431, 432) is movable and secured to the second mould portion (402) of the first element (41).

7. The method according to any one of claims 1 to 5, wherein the thickest element among the first and second element has a maximum thickness of 1.5 to 4 times thicker than the thickness of the thinnest element.

8. The method according to one of claims 1 to 5 or 7, wherein the thickest element among the first and second element has a thickness of between 0.50 mm and 1.50 mm, for example between 0.75 mm and 1.25 mm, for example in the order of 1 mm, and the thinnest element has a thickness of between 0.75 mm and 3 mm, for example between 1 mm and 2 mm, for example in the order of 1.5 mm.

9. The method according to any one of claims 1 to 5, wherein the elements are in thermoplastic materials and comprise a so-called "thick" element and a so-called "thin" element, the thickness e2 of the thick element being defined by:

$$e2 = \sqrt{2} \cdot e1$$

where e1 is the thickness of the thin element, so that the cooling time of the thick element is twice the cooling time of the thin element.

10. The method according to any one of claims 1 to 5, wherein the part is formed of at least three elements, and the thickest element has a maximum thickness in the order of 1.5 to 3.0 times thicker than the thickness of the next thinner element.

11. A system for producing polymer parts to implement a method according to any one of the preceding claims.

FIG. 1A

FIG. 1B

FIG. 1C

FIG. 1D

# FIG. 2

# FIG. 3

FIG. 4A1

FIG. 4A2

FIG. 4B1

FIG. 4B2

FIG. 4C1

FIG. 4C2

FIG. 4D1

FIG. 4D2

**FIG. 5A1**

**FIG. 5A2**

**FIG. 5B1**

**FIG. 5B2**

**FIG. 5C1**

**FIG. 5C2**

**FIG. 5D1**

**FIG. 5D2**

**FIG. 5E1**

**FIG. 5E2**

FIG. 6A

FIG. 6B

FIG. 6C

FIG. 6D

FIG. 6E

FIG. 6F

FIG. 6G

FIG. 6H

FIG. 6I

FIG. 6J

FIG. 6K

FIG. 6L

FIG. 6M

FIG. 6N

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102007051701